# EUROPÄISCHE PATENTSCHRIFT

(11) **EP 3 468 790 B1**
(45) Veröffentlichungstag und Bekanntmachung des Hinweises auf die Patenterteilung: **29.09.2021**
(21) Anmeldenummer: 17734634.3
(22) Anmeldetag: 24.05.2017
(51) Int. Cl.: B32B 7/12, B32B 23/08, B32B 23/12, B32B 27/08, B32B 27/18, B32B 27/34, B32B 27/36, B32B 27/40

(54) **PANEEL**
PANELING
LAMBRIS

(30) Priorität: 12.07.2016 DE 102016112792
(43) Veröffentlichungstag der Anmeldung: 17.04.2019
(73) Patentinhaber: Schulte, Guido, 59602 Rüthen-Meiste (DE)
(72) Erfinder: Schulte, Guido, 59602 Rüthen-Meiste (DE)
(74) Vertreter: Griepenstroh, Jörg
(86) Internationale Anmeldenummer: PCT/DE2017/100449
(87) Internationale Veröffentlichungsnummer: WO 2018/010717

(56) Entgegenhaltungen:
- WO-A1-2016/010471
- NL-A- 9 200 658
- US-A1- 2002 041 954
- US-A1- 2003 129 430

## Beschreibung

Die Erfindung betrifft ein Paneel mit den Merkmalen des Patentanspruchs 1.

Aus der EP 30 20 885 A1 ist es bekannt, ein Paneel zur Ausbildung eines wasserfesten Bodens zu schaffen, wobei das Paneel einen Kern aus einem thermoplastischen Material, eine feste Deckschicht sowie eine Verstärkungsschicht zwischen der Deckschicht und dem Kern besitzt. Das Material des Kerns ist vorzugsweise PVC, PE oder ABS. Die Verstärkungsschicht enthält vorzugsweise PVC und/oder PE und ist vorzugsweise hart. Die Verstärkungsschicht ist vorzugsweise mit dem Kern verschweißt oder verklebt.

Die WO 2016/010471 A1 offenbart eine mehrschichtige Platte, die eine Polyurethan-Kernschicht und eine Zelluloseschicht umfasst, die an der Kernschicht mit einer Polyurethan-Klebstoffschicht haftet.

Die US 2003/0129430 A1 offenbart eine Sandwichplatte, die als Baumaterial verwendet wird und eine transparente oder lichtdurchlässige Außenfolie aus Polyurethan, eine Klebeschicht und eine harzimprägnierte Zellulosefolie (Schutzfilm) umfasst.

Die US 2002/0041954 A1 offenbart eine Wandplatte, die aus verschiedenen Schichten hergestellt ist, wie z. B. eine dekorative Hartschicht, eine Polyurethan-Haftschicht und eine Polyurethan-Hartkernschicht.

Die NL 9200658 A offenbart ein Verfahren zur Herstellung eines Paneels aus einem Kern aus Polyurethan, der auf einer Außenseite von einer Deckschicht bedeckt ist.

Der Erfindung liegt die Aufgabe zugrunde, ein industriell herstellbares Paneel aufzuzeigen, das auf einem Unterboden flächig geklebt oder fixiert werden kann, um eine Fläche eines Raumes zu bedecken, insbesondere den Boden.

Patentanspruch 1 beschreibt ein solches Paneel.

Ein Verfahren zur Herstellung eines solchen Paneels ist Gegenstand des Patentanspruchs 11.

Das Paneel besitzt eine Oberseite, eine Unterseite und wenigstens vier Randseiten. Die Randseiten können zumindest teilweise im Übergang zu der Oberseite eine Abschrägung, eine Falz oder eine Stufenfalz aufweisen. Die Fasen oder Falzausführungen können verschiedene dekorative Gestaltungsformen oder -färben, abweichend von den eigentlichen Oberflächenfarben oder -gestaltungen aufweisen. Das erfindungsgemäße Paneel besitzt einen Mehrschichtaufbau. Es umfasst eine elastische Basisschicht. Die Basisschicht besteht vollständig oder überwiegend aus einem elastisch eingestellten Polyurethan. Der Polyurethananteil der Basisschicht selbst ist in jedem Fall elastisch eingestellt. Es können weniger elastische Zuschlagstoffe in das Polyurethan eingebettet sein, wobei die Basisschicht insgesamt elastisch bleibt. Oberhalb der Basisschicht ist eine im Vergleich mit der Basisschicht weniger elastische Deckschicht angeordnet. Die Deckschicht ist über eine Klebstoffschicht mit der Basisschicht zu dem Mehrschichtaufbau verpresst.

Das erfindungsgemäße Paneel auf Polyurethanbasis soll im Wesentlichen elastomere Eigenschaften besitzen. Ein solches Paneel ist biegsam und insbesondere bruchfrei biegsam, bei einem Rollendurchmesser größer oder gleich 50 mm, bzw. einem Biegeradius von mindestens 25 mm. Durch die Elastomereigenschaften besitzt ein solches Paneel eine gute Eindruckbeständigkeit.

Zudem soll sich auch die Klebstoffschicht nachgiebig verhalten. Die Klebstoffschicht soll aus einem thermoplastisch eingestellten Polyurethan, einem Polyamid oder aus einem Polyester bestehen. Das Ausgangsprodukt der Klebstoffschicht wird vor dem Verpressen der Deckschicht mit der Basisschicht als Film oder Pulver zwischen der Deckschicht und der Basisschicht angeordnet.

Die Deckschicht ist mehrlagig. Sie besitzt wenigstens eine Dekorschicht und wenigstens eine oberhalb der Dekorschicht angeordnete Schutzschicht. Die Dekorschicht ist vorzugsweise auf Basis von Zellulose hergestellt. Die Dekorschicht kann mehrere Lagen von auf Zellulose basierenden Schichten aufweisen. Es handelt sich vorzugsweise bei der wenigstens einen auf Zellulose basierenden Schicht um eine Schicht aus Papier, wobei eine obere der wenigstens zwei Schichten eine dekorative Oberfläche besitzt. Die wenigstens eine Dekorschicht ist vorzugsweise mit einem aushärtbaren Kunstharz imprägniert. Hierbei handelt es sich vorzugsweise um ein aminoplastisches Harz, ein Melaminharz, ein Polyurethan oder um ein Gemisch der zuvor genannten Stoffe. Der Gewichtsanteil der Imprägnierung beträgt 70 bis 130 Gewichtsprozent. Die Dekorschicht kann eine Struktur haben, die synchron zum Dekorbild passt. Die Oberfläche des fertigen Paneels kann unterschiedliche Glanzgrade aufweisen, vorzugsweise 3 bis 4 unterschiedliche Glanzgrade, passend zu dem oder abgestimmt auf das Dekorbild. Je nach Anzahl der Dekorschichten hat die Deckschicht eine Dicke in einem Bereich von 0,10 bis 0,50 mm.

Die Schutzschicht oberhalb der Dekorschicht enthält vorzugsweise antiabrasive Bestandteile. Es kann sich bei der Schutzschicht, die auch als Overlay bezeichnet wird, um eine Schicht aus imprägnierter Edelzellulose handeln. Diese wird beim Verpressen transparent. Die Schutzschicht kann alternativ auch als flüssige Schicht oder als Pulver auf die Dekorschicht appliziert sein und verbindet sich beim Verpressen mit der Dekorschicht.

Erfindungsgemäß werden alle Komponenten, das heißt, von oben nach unten betrachtet, die Schutzschicht (Overlay), die wenigstens eine Dekorschicht, die Klebstoffschicht und die Basisschicht in einem einzigen Arbeitsgang miteinander verpresst. Als Klebstoff zwischen der Deckschicht und der Basisschicht fungiert nicht das Harz aus der imprägnierten Dekorschicht, sondern ergänzend bzw. ausschließlich die Klebstoffschicht. Das heißt, es wird ergänzend zur Dekorschicht, bei der es sich bevorzugt um ein imprägniertes Dekorpapier handelt, eine Klebstoffschicht z.B. als Film, pulverförmig oder als pastöses Hotmelt aufgetragen. Die Klebstoffschicht wird mit einer Menge von mindestens 15 g/m² aufgetragen, vorzugsweise mindestens 60 g/m².

Das ist ein Unterschied gegenüber üblichen Laminataufbauten, mit HDF-Platten. Die vorgefertigten Teile des erfindungsgemäßen Paneels sind mithin die Basisschicht und die Dekorschicht, die auch dekorative Komponente der Deckschicht bezeichnet werden können. Die Presszeit der Bauteile beträgt 8 bis 30 Sekunden. Die Temperatur an der Pressfläche eines dekorseitigen Pressbleches liegt dabei zwischen 150°C und 220°C. Nach heutigem Stand der Technik lassen sich aminoplastisch imprägnierte Dekorpapiere oder Oberflächenmaterialien nur mit Holzwerkstoffplatten in deinem Arbeitsgang "direkt" mit der Platte verpressen und dabei die Oberflächen aushärten und prägen. Im Rahmen der beschriebenen neuen Erfindung ist das auch mit einer wasserfesten Basisschicht aus Polyurethan möglich, allerdings unter Zuhilfenahme eines auf Wärme und Druck aktivierbaren Klebstoffes, vorzugsweise eines Klebstoffes auf Pulverbasis. Der Klebstoff wird bezüglich seiner Filmaktivierungstemperatur und der Wärmeeinwirkdauer auf die Reaktionsbedingungen der dekorativen Oberschicht, inklusive der Schutzschicht abgestimmt.

Das erfindungsgemäße Paneel behält seine elastomeren Eigenschaften auch dann, wenn das Eigengewicht erhöht ist. Vorzugsweise enthält die Basisschicht aus dem elastisch eingestellten Polyurethan Zuschlagstoffe auf mineralischer Basis oder auf Basis derer synthetischen Äquivalente, beispielsweise feinkörnige, mineralbasierte Zuschlagstoffe. Auf diese Weise wird die Dichte der Basisschicht größer als 1,5 g/cm³ eingestellt. Vorzugsweise ist die Dichte der Basisschicht größer als 1,8 g/cm³. Die elastische Basisschicht aus Polyurethan kann zumindest teilweise eine Schaumstruktur haben. Die Dicke der Basisschicht beträgt vorzugsweise zwischen 1 und 10 mm, insbesondere zwischen 1 und 3 mm.

Die Basisschicht aus Polyurethan kann vor dem Verpressen mit der Dekorschicht angeschliffen oder angeraut werden. Dies ist für nachfolgende Verklebungen besonders vorteilhaft, das sich die Klebstoffe besser in der Polyurethanschicht verkrallen können. Der Schleifvorgang kann auch sinnvoll sein, um Plattenunebenheiten zu egalisieren. In einer besonderen Ausführungsform wird die angeschliffene Polyurethan-Basisschicht noch vor dem Verkleben mit einem Primer /Haftvermittler beaufschlagt

Anders als bei herkömmlichen Laminatverpressungen benötigt das erfindungsgemäße Vorprodukt des Paneels, beim Verpressen lediglich oberseitige Hitze zum Verbinden der Deckschicht mit der Basisschicht. Da die Basisplatte aus Polyurethan Hitze sehr gut leitet und speichert, wird die gepresste Platte erweicht, ohne dass die Bindemittelstruktur des Polyurethans zerstört wird. Diese im heißen Zustand relativ weiche Basisschicht dient gleichzeitig als nachgiebiges Kissen oder Presspolster. Die Nachgiebigkeit der Basisschicht ermöglicht die Herstellung tiefer Strukturen in der Oberfläche der gepressten Platte, ohne dass dafür entsprechend dicke Decklagen eingebracht werden müssen. Die Basisschicht gleicht während des Pressvorgangs die Erhöhungen und Vertiefungen in der Pressplatte aus. Weil die PUR-Basisplatte jedoch elastomere Eigenschaften hat, federt die Basisschicht nach der Entlastung zurück und wird im Wesentlichen nicht durch die Struktur des Pressbleches geprägt. Die Oberflächenstruktur wird in der Deckschicht und im gewissen Umfang in der Klebstoffschicht ausgebildet.

Es ist zweckmäßig, wenn die nach dem Verpressen heiße Platte für einen kurzen Zeitraum, insbesondere für mindestens zehn Sekunden zur Abkühlung ausgelagert oder sogar aktiv gekühlt wird. Die gepresste Platte nimmt Wärme relativ schnell auf, gibt sie allerdings auch schnell wieder ab. Die Lagerung der gekühlten Platten erfolgt in gestapelter Form vorzugsweise erst nach dem Auskühlen bzw. aktiven Abkühlen.

Alternativ kann die Kühlung auch durch gekühlte Walzenkalander geschehen, insbesondere dann, wenn die Verpressung der Schichten auf kontinuierlich arbeitenden Pressenanlagen erfolgt.

Nach dem Pressen und Auskühlen werden die so hergestellten Platten zugeschnitten und randseitig bearbeitet, so dass die Paneele entstehen. Zusätzlich kann lediglich aus optischen Gesichtspunkten oder zur Klebung auf einen Unterboden an einer Unterseite der Platte oder des Paneels, eine Beschichtung aufgebracht werden.

Auch eine Trittschallkaschierung kann an der Unterseite appliziert werden. Zusätzlich oder optional kann an der Unterseite eine Antirutschbeschichtung befestigt sein. Auch eine werkseitig applizierte Klebstoffschicht ist möglich. Die Klebstoffschicht hilft bei einer Fixierung oder Klebung mit einem Untergrund.

Die erfindungsgemäßen Paneele benötigen keinen Gegenzug an der Unterseite. Die Komponenten der Deckschicht und auch die Klebstoffschicht bauen keine Zugspannungen unter üblichen Nutzungsbedingen auf, die nicht durch das Paneel selbst aufgenommen werden können, insbesondere wenn das Paneel ein sehr hohes Eigengewicht besitzt. Aus diesem Grund kann auch ein Gegenzug an der Unterseite des Paneels entfallen. Zudem ist das Paneel zur Klebung am Einbauort auf dem Unterboden vorgesehen.

Das erfindungsgemäße Paneel ist vorzugsweise wasserfest. Die Paneele sind biegsam und keinesfalls starr. Der Grad der Biegsamkeit kann über die elastomeren Eigenschaften des Polyurethan-Werkstoffs der Basisschicht eingestellt werden. Es handelt sich bei dem Material der Basisschicht nicht um einen thermoplastischen Werkstoff, damit im verlegten Zustand auch bei punktueller Sonneneinstrahlung oder lokaler Erwärmung nur eine geringe, bzw. am Fertigprodukt unter üblichen Wohnbedingungen keine wahrnehmbare, thermisch bedingte Ausdehnung des Paneels bemerkbar wird. Optional können Mittel zur Verbesserung der Abrasionsbeständigkeit oder Erhöhung der Schlagfestigkeit und Steifigkeit im Zusammenhang mit der Dekorschicht zum Einsatz kommen, beispielsweise im Zusammenhang mit dem Overlay. Aber auch in diesem Fall befinden sich die Mittel zur Erhöhung der Widerstandsfähigkeit der erfindungsgemäßen Paneele oberhalb der Klebstoffschicht, die vorzugsweise ebenfalls aus einem Polyurethan besteht.

Zusammengefasst handelt es sich bei dem erfindungsgemäßen Paneel um eine Polyurethan-Elastomerplatte, bei welcher imprägnierte Dekorpapiere zu einem Produkt mit der Basisschicht aus Polyurethan verbunden sind, wobei sich die so hergestellte Platte bzw. das Paneel nicht starr, sondern insgesamt biegsam verhält.

Das erfindungsgemäße Paneel ist nicht in dem Sinne elastisch, dass es in Längsund Querrichtung, das heißt innerhalb der Verlegeebene größer 10% gedehnt oder größer 5% gestaucht werden kann. Nachgiebigkeiten senkrecht zur Verlegeebene und insbesondere innerhalb der Deckschicht sind unerwünscht. Allerdings kommt die Erfindung ohne Verstärkungsschicht im Bereich der Dekorschicht aus. Die Deckschicht kann besonders einfach zusammen mit der Basisschicht hergestellt werden, so dass keine bereits fertig verpressten Deckschichten, wie z. B. Folienbeläge auf eine PUR-Platte geklebt werden müssen. Die verschleißfeste Schutzschicht (Overlay), die Dekorschicht und die Klebstoffschicht werden mit der Basisschicht gemeinsam in einem Arbeitsschritt beim Verpressen aktiviert und ausgehärtet.

Eine Besonderheit der Erfindung ist, dass eine Basisschicht aus PUR mit höheren Dämmwerten und einen relativ starre, imprägnierte, papierbasierte Dekorschicht so aufeinander abgestimmt sind, dass die gewünschte Biegung oder Stauchung möglich wird. Das gelingt durch die erfindungsgemäß vorgesehene Kleberschicht und durch die aufeinander abgestimmten Festigkeitswerte bzw. Dehnungseigenschaften der verwendeten Werkstoffe.

Wenn das Paneel dekorseitig nach oben gebogen wird, dehnt sich die elastomer eingestellte PUR-Basisschicht, während die Dekorseite eher gestaucht wird. Da die Dekorseite aufgrund der aminoplastisch und/oder durch Polyurethan imprägnierten Dekorlage unempfindlich gegen thermische Einflüsse ist, verhält sich das Produkt insgesamt formstabil. Bei Fußbodenheizungen sind Temperaturen bis 30°C unkritisch. Zumeist ist die Unterseite des Paneels kühler als die Oberseite, so dass sich die Unterseite bei regulärer Verwendung nicht stärker dehnt als die Oberseite. Die Abstimmung und Auswahl der Werkstoffe sind wichtige Merkmale für den Erfolg der Erfindung.

Der gesamte Aufbau ist im Unterschied zu Laminatböden als wasserfest zu verstehen. Das Produkt nimmt maximal 5 % Wasser auf, und neigt bei einer Feuchtigkeitsaufnahme bis maximal 3% nicht zum Quellen. Die Kantenquellungen liegen nach 24 h Wasserlagerung bei kleiner 3%. Der Aufbau kann als anschmiegsam bezeichnet werden, so dass sich beim Verlegen keine Hohlräume zum Unterboden, z.B. zum Estrich ausbilden. Daher ist ein aus diesen Paneelen gebildeter Boden beim Begehen sehr leise. Es gibt keinen Resonanzhohlraum.

Unebenheiten bis 1 mm werden überbrückt und zeichnen sich nicht im Oberbelag bei der Nutzung durch. Das ist ein besonders vorteilhafter Aspekt im Vergleich zu Produkten mit einer thermoplastischen Basisschicht. Vorteilhaft ist ein Aufbau, bei dem die Papiere in der Dekorschicht elastisch imprägniert sind, aber nicht thermoplastische reagieren. Die Erfindung vereint die Vorteile eines starren Laminatbodens mit denen von Böden aus wasserfesten, thermoplastischen Werkstoffen.

Die Erfindung betrifft ein Verfahren zur Herstellung eines Paneels mit den oben genannten Merkmalen mit folgenden Schritten:
a. Bereitstellen einer Basisschicht, welche vollständig oder überwiegend aus einem elastisch eingestellten Polyurethan besteht und optional Zuschlagstoffe auf mineralischer Basis oder auf Basis derer synthetischen Äquivalente enthält;
b. Bereitstellen und Anordnen einer Deckschicht oberhalb der Basisschicht, wobei die Deckschicht unter Eingliederung einer Klebstoffschicht auf der Basisschicht aufliegt;
c. Verpressen der Deckschicht mit der Basisschicht, wobei die Klebstoffschicht unter Einfluss von Wärme, die von der Presse wenigstens in die Deckschicht eingebracht wird, zu dem Mehrschichtaufbau verpresst wird.

Das Verfahren kann dadurch gekennzeichnet sein, dass der durch Verpressen hergestellte Mehrschichtaufbau unmittelbar nach der Entnahme aus der Presse für mindestens 10 Sekunden auskühlt.

Das Verfahren kann dadurch gekennzeichnet sein, dass das Pressblech eine Oberflächenstruktur besitzt, die in die Deckschicht übertragen wird, wobei die Struktur in dem fertigen Paneel nur in der Deckschicht und optional zusätzlich in der Klebstoffschicht ausgebildet wird.

Das Verfahren kann dadurch gekennzeichnet sein, dass die Schutzschicht vor dem Verpressen in flüssiger Form oder als Pulver auf die Oberseite der Deckschicht aufgetragen wird.

Das Verfahren kann dadurch gekennzeichnet sein, dass zur Ausbildung der Klebstoffschicht ein Film oder ein Pulver aus den zu verschmelzenden und auszuhärtenden Werkstoffen der Klebstoffschicht zwischen der Basisschicht und der Deckschicht angeordnet wird.

## Patentansprüche

1. Paneel, um eine Fläche eines Raumes zu bedecken, wobei das Paneel eine Oberseite, eine Unterseite und wenigstens vier Randseiten besitzt, wobei das Paneel einen Mehrschichtaufbau besitzt mit einer elastischen Basisschicht, wobei die Basisschicht vollständig oder überwiegend aus einem elastisch eingestellten Polyurethan besteht und mit einer gegenüber der Basisschicht weniger elastischen Deckschicht oberhalb der Basisschicht, wobei die Deckschicht über eine Klebstoffschicht mit der Basisschicht zu dem Mehrschichtaufbau verpresst ist, **dadurch gekennzeichnet, dass** die Klebstoffschicht von einem thermoplastischen Polyurethan, einem Polyamid oder aus einem Polyester besteht und vor dem Verpressen der Deckschicht mit der Basisschicht als Film oder als Pulver zwischen der Deckschicht und der Basisschicht angeordnet ist, wobei sich die Klebstoffschicht nachgiebig verhält, wobei das Paneel insgesamt elastomere Eigenschaften hat und biegsam ist.

2. Paneel nach Anspruch 1, **dadurch gekennzeichnet, dass** die Deckschicht wenigstens eine Dekorschicht und wenigstens eine oberhalb der Dekorschicht angeordnete Schutzschicht aufweist.

3. Paneel nach Anspruch 2, **dadurch gekennzeichnet, dass** die Schutzschicht antiabrasive Bestandteile enthält.

4. Paneel nach einem der Ansprüche 1 bis 3, **dadurch gekennzeichnet, dass** mindestens zwei der vier Randseiten mit einer Fase oder Stufenfalz versehen sind.

5. Paneel nach einem der Ansprüche 1 bis 4, **dadurch gekennzeichnet, dass** die Basisschicht Zuschlagstoffe auf mineralischer Basis oder auf Basis derer synthetischen Äquivalente enthält, so dass die Dichte der Basisschicht größer als 1,5 g/cm³ eingestellt ist.

6. Paneel nach Anspruch 5, **dadurch gekennzeichnet, dass** die Dichte der Basisschicht größer als 1,8 g/cm³ ist.

7. Paneel nach einem der Ansprüche 1 bis 6, **dadurch gekennzeichnet, dass** an einer Unterseite der Basisschicht eine Trittschall dämpfende Schicht angeordnet ist.

8. Paneel nach einem der Ansprüche 1 bis 7, **dadurch gekennzeichnet, dass** an seiner Unterseite eine Anti-Rutsch-Schicht oder eine Klebstoffschicht angeordnet ist.

9. Paneel nach einem der Ansprüche 1 bis 8, **dadurch gekennzeichnet, dass** die Dekorschicht auf Basis von Zellulose hergestellt ist und mit einem aushärtbaren Kunstharz imprägniert ist, welches ein aminoplastisches Harz, ein Melaminharz, ein Polyurethan oder ein Gemisch der genannten Stoffe enthält.

10. Paneel nach Anspruch 9, **dadurch gekennzeichnet, dass** es frei von einem stabilisierenden unterseitigen Gegenzug um seine gegenüber der Basisschicht weniger elastische Deckschickt zur Oberseite hin biegbar ist, wobei der von der Oberseite des Paneels gemessene kleinste Biegeradius, bis zu dem eine zerstörungsfreie Biegung des Paneels möglich ist, 25 mm beträgt.

11. Verfahren zur Herstellung eines Paneels mit den Merkmalen eines der vorangegangen Ansprüche 1 bis 10 mit folgenden Schritten:
a. Bereitstellen einer Basisschicht, welche vollständig oder überwiegend aus einem elastisch eingestellten Polyurethan besteht und optional Zuschlagstoffe auf mineralischer Basis oder auf Basis derer synthetischen Äquivalente enthält;
b. Bereitstellen und Anordnen einer Deckschicht oberhalb der Basisschicht, wobei die Deckschicht unter Eingliederung einer Klebstoffschicht auf der Basisschicht aufliegt;
c. Verpressen der Deckschicht mit der Basisschicht, wobei die Klebstoffschicht unter Einfluss von Wärme, die von der Presse wenigstens in die Deckschicht eingebracht wird, zu dem Mehrschichtaufbau verpresst wird.

12. Verfahren nach Anspruch 11, **dadurch gekennzeichnet, dass** das Verpressen bei Temperaturen in einem Bereich von 150 °C bis 220 °C erfolgt, wobei diese Temperatur an der Oberfläche eines Pressbleches eingestellt wird, das mit dem Paneel in Kontakt gebracht wird.

13. Verfahren nach Anspruch 11 oder 12, **dadurch gekennzeichnet, dass** die besagte Temperatur nur an einem einzigen Pressblech eingestellt wird, welches mit der Deckschicht in Kontakt kommt.

14. Verfahren nach einem der Ansprüche 11 bis 13, **dadurch gekennzeichnet, dass** die Presszeit 8 bis 30 Sekunden beträgt.

15. Verfahren nach einem der Ansprüche 11 bis 14, **dadurch gekennzeichnet, dass** der durch Verpressen hergestellte Mehrschichtaufbau unmittelbar nach der Entnahme aus der Presse für mindestens 10 Sekunden auskühlt.

16. Verfahren nach einem der Ansprüche 11 bis 15, **dadurch gekennzeichnet, dass** das Pressblech eine Oberflächenstruktur besitzt, die in die Deckschicht übertragen wird, wobei die Struktur in dem fertigen Paneel nur in der Deckschicht und optional zusätzlich in der Klebstoffschicht ausgebildet wird.

17. Verfahren nach einem der Ansprüche 11 bis 16, **dadurch gekennzeichnet, dass** eine Dicke der Deckschicht abhängig von der Dicke und Anzahl von Lagen von auf Basis von Zellulose hergestellten Schichten und der oberseitigen Schutzschicht auf 0,1 bis 0,5 mm eingestellt wird.

18. Verfahren nach einem der Ansprüche 11 bis 17, **dadurch gekennzeichnet, dass** die Schutzschicht vor dem Verpressen in flüssiger Form oder als Pulver auf die Oberseite der Deckschicht aufgetragen wird.

19. Verfahren nach einem der Ansprüche 11 bis 18, **dadurch gekennzeichnet, dass** zur Ausbildung der Klebstoffschicht ein Film oder ein Pulver aus den zu verschmelzenden und auszuhärtenden Werkstoffen der Klebstoffschicht zwischen der Basisschicht und der Deckschicht angeordnet wird.

## Claims

1. Panel for covering an area of a room, wherein the panel has an upper side, an underside and at least four side edges, wherein the panel has a multilayer structure with an elastic base layer, wherein the base layer consists entirely or predominantly of an elastically set polyurethane, and with a cover layer above the base layer that is less elastic than the base layer, wherein the cover layer is pressed with the base layer via an adhesive layer to form the multilayer structure, **characterised in that** the adhesive layer consists of a thermoplastic polyurethane, a polyamide or of a polyester and is arranged as film or powder between the cover layer and the base layer before the cover layer is pressed with the base layer, wherein the adhesive layer behaves in a yielding manner, wherein the panel as a whole has elastomeric properties.

2. Panel according to claim 1, **characterised in that** the cover layer has at least one decorative layer and at least one protective layer arranged above the decorative layer.

3. Panel according to claim 2, **characterised in that** the protective layer contains antiabrasive constituents.

4. Panel according to any of claims 1 to 3, **characterised in that** at least two of the four side edges are provided with a chamfer or rabbet.

5. Panel according to any of claims 1 to 4, **characterised in that** the base layer contains additives with a mineral basis or with a basis of the synthetic equivalents thereof, such that the density of the base layer is set to be greater than 1.5 g/cm³.

6. Panel according to claim 5, **characterised in that** the density of the base layer is greater than 1.8 g/cm³.

7. Panel according to any of claims 1 to 6, **characterised in that** an impact sound-absorbing layer is arranged on an underside of the base layer.

8. Panel according to any of claims 1 to 7, **characterised in that** an anti-slip layer or an adhesive layer is arranged on its underside.

9. Panel according to any of claims 1 to 8, **characterised in that** the decorative layer is produced with a cellulose basis and impregnated with a curable synthetic resin which contains an aminoplastic resin, a melamine resin, a polyurethane or a mixture of the aforementioned substances.

10. Panel according to claim 9, **characterised in that** it is free from a stabilising underside counter-pull and bendable about its cover layer, which is less elastic than the base layer, towards the upper side, wherein the smallest bending radius, as measured from the upper side of the panel, up to which non-destructive bending of the panel is possible, is 25 mm.

11. Method for producing a panel having the features of any of the preceding claims 1 to 10, having the following steps:
a) providing a base layer which consists entirely or predominantly of an elastically set polyurethane and optionally contains additives with a mineral basis or with a basis of the synthetic equivalents thereof;
b) providing and arranging a cover layer above the base layer, wherein the cover layer rests on the base layer while incorporating an adhesive layer;
c) pressing the cover layer with the base layer, wherein the adhesive layer is pressed under the influence of heat introduced by the press at least into the cover layer to form the multilayer structure.

12. Method according to claim 11, **characterised in that** the pressing takes place at temperatures in a range of 150°C to 220°C, wherein this temperature is set on the surface of a press plate which is brought into contact with the panel.

13. Method according to claim 11 or 12, **characterised in that** said temperature is set only on a single press plate which comes into contact with the cover layer.

14. Method according to any of claims 11 to 13, **characterised in that** the pressing time is 8 to 30 seconds.

15. Method according to any of claims 11 to 14, **characterised in that** the multilayer structure produced by pressing cools down for at least 10 seconds immediately after removal from the press.

16. Method according to any of claims 11 to 15, **characterised in that** the press plate has a surface structure which is transferred into the cover layer, wherein the structure in the finished panel is formed only in the cover layer, and, optionally, additionally in the adhesive layer.

17. Method according to any of claims 11 to 16, **characterised in that** a thickness of the cover layer is set to 0.1 to 0.5 mm depending on the thickness and number of plies of layers produced with a cellulose basis and the upper side protective layer.

18. Method according to any of claims 11 to 17, **characterised in that** the protective layer is applied in liquid form or as powder onto the upper side of the cover layer before the pressing.

19. Method according to any of claims 11 to 18, **characterised in that**, to form the adhesive layer, a film or a powder of the materials of the adhesive layer which are to be melted and cured is arranged between the base layer and the cover layer.

## Revendications

1. Panneau pour couvrir une surface d'une pièce, dans lequel le panneau comporte un côté supérieur, un côté inférieur et au moins quatre côtés de bord, dans lequel le panneau comporte une structure multicouche avec une couche de base élastique, dans lequel la couche de base consiste entièrement ou principalement en un polyuréthane ajusté de manière élastique, et avec une couche de recouvrement au-dessus de la couche de base qui est moins élastique que la couche de base, dans lequel la couche de recouvrement est pressée sur la couche de base par l'intermédiaire d'une couche adhésive pour former la structure multicouche, **caractérisé en ce que** la couche adhésive consiste en un polyuréthane thermoplastique, un polyamide ou un polyester et est disposée en tant que film ou poudre entre la couche de recouvrement et la couche de base avant que la couche de recouvrement ne soit pressée sur la couche de base, dans lequel la couche adhésive se comporte élastiquement, dans lequel le panneau présente des propriétés généralement élastomères et est flexible.

2. Panneau selon la revendication 1, **caractérisé en ce que** la couche de recouvrement présente au moins une couche décorative et au moins une couche de protection disposée au-dessus de la couche décorative.

3. Panneau selon la revendication 2, **caractérisé en ce que** la couche de protection contient des composants anti-abrasifs.

4. Panneau selon l'une quelconque des revendications 1 à 3, **caractérisé en ce qu'**au moins deux des quatre côtés de bord sont dotés d'un chanfrein ou d'une battue.

5. Panneau selon l'une quelconque des revendications 1 à 4, **caractérisé en ce que** la couche de base contient des agrégats à base de minéraux ou à base de leurs équivalents synthétiques, de sorte que la densité de la couche de base est définie supérieure à 1,5 g/cm³.

6. Panneau selon la revendication 5, **caractérisé en ce que** la densité de la couche de base est supérieure à 1,8 g/cm³.

7. Panneau selon l'une quelconque des revendications 1 à 6, **caractérisé en ce qu'**une couche d'amortissement de bruits d'impact est disposée sur un côté inférieur de la couche de base.

8. Panneau selon l'une quelconque des revendications 1 à 7, **caractérisé en ce qu'**une couche antidérapante ou une couche adhésive est disposée sur son côté inférieur.

9. Panneau selon l'une quelconque des revendications 1 à 8, **caractérisé en ce que** la couche décorative est fabriquée à base de cellulose et est imprégnée d'une résine synthétique durcissable, laquelle contient une résine aminoplastique, une résine de mélamine, un polyuréthane ou un mélange desdites substances.

10. Panneau selon la revendication 9, **caractérisé en ce qu'**il est pliable vers le côté supérieur, sans contre-tension stabilisante sur le côté inférieur, autour de sa couche de recouvrement, qui est moins élastique que la couche de base, dans lequel le plus petit rayon de pliage, mesuré à partir du côté supérieur du panneau jusqu'auquel un pliage non destructif du panneau est possible, est de 25 mm.

11. Procédé de fabrication d'un panneau avec les caractéristiques de l'une quelconque des revendications précédentes 1 à 10, avec les étapes suivantes consistant à :
a. fournir une couche de base, laquelle consiste entièrement ou principalement en un polyuréthane ajusté de manière élastique et contient facultativement des agrégats à base de minéraux ou à base de leurs équivalents synthétiques ;
b. fournir et disposer une couche de recouvrement au-dessus de la couche de base, dans lequel la couche de recouvrement repose sur la couche de base avec incorporation d'une couche adhésive ;
c. presser la couche de recouvrement sur la couche de base, dans lequel la couche adhésive est pressée sous l'influence de la chaleur introduite par la presse au moins dans la couche de recouvrement pour former la structure multicouche.

12. Procédé selon la revendication 11, **caractérisé en ce que** le pressage est effectué à des températures dans une plage de 150 °C à 220 °C, dans lequel ladite température est ajustée à la surface d'une plaque de pressage qui est mise en contact avec le panneau.

13. Procédé selon la revendication 11 ou 12, **caractérisé en ce que** ladite température est réglée uniquement sur une seule plaque de pressage, laquelle est mise en contact avec la couche de recouvrement.

14. Procédé selon l'une quelconque des revendications 11 à 13, **caractérisé en ce que** le temps de pressage est de 8 à 30 secondes.

15. Procédé selon l'une quelconque des revendications 11 à 14, **caractérisé en ce que** la structure multicouche produite par pressage refroidit pendant au moins 10 secondes immédiatement après son retrait de la presse.

16. Procédé selon l'une quelconque des revendications 11 à 15, **caractérisé en ce que** la plaque de pressage comporte une structure de surface qui est transférée dans la couche de recouvrement, dans lequel la structure est formée dans le panneau fini uniquement dans la couche de recouvrement et facultativement également dans la couche adhésive.

17. Procédé selon l'une quelconque des revendications 11 à 16, **caractérisé en ce qu'**une épaisseur de la couche de recouvrement est ajustée entre 0,1 et 0,5 mm en fonction de l'épaisseur et du nombre de couches à base de cellulose et de la couche de protection du côté supérieur.

18. Procédé selon l'une quelconque des revendications 11 à 17, **caractérisé en ce que** la couche de protection est appliquée sous forme liquide ou en tant que poudre sur le côté supérieur de la couche de recouvrement avant le pressage.

19. Procédé selon l'une quelconque des revendications 11 à 18, **caractérisé en ce qu'**un film ou une poudre des matériaux de la couche adhésive à fondre et à durcir est disposé entre la couche de base et la couche de recouvrement pour former la couche adhésive.
